# EUROPEAN PATENT APPLICATION

(11) **EP 3 981 828 A1**
(43) Date of publication of application: **13.04.2022**
(21) Application number: 20818221.2
(22) Date of filing: 02.06.2020
(51) Int. Cl.: C08J 5/04, B29C 31/00

(54) **METHOD FOR MANUFACTURING CARBON-FIBER-REINFORCED MOLDING MATERIAL AND MOLDED ARTICLE**

(30) Priority: 05.06.2019 JP 2019105295
(71) Applicant: DIC Corporation, Tokyo 174-8520 (JP)
(72) Inventor: NAKANO, Mikihiko, Takaishi-shi, Osaka 592-0001 (JP); NAGATA, Kouji, Takaishi-shi, Osaka 592-0001 (JP); NISHIKAWA, Daisuke, Takaishi-shi, Osaka 592-0001 (JP); HAMADA, Kenichi, Takaishi-shi, Osaka 592-0001 (JP)
(74) Representative: TBK
(86) International application number: PCT/JP2020/021696
(87) International publication number: WO 2020/246447

(57) **Abstract**

Provided are a method for producing a carbon fiber-reinforced molding material including a step of detecting the presence of metal in a molding material by a magnetic sensor-type metal detection method, and a method for producing a molded article including subjecting the carbon fiber-reinforced molding material produced by the production method to hot press molding. The method for producing a carbon fiber-reinforced molding material involves accurately detecting foreign metal in the carbon fiber-reinforced molding material and efficiently produces a carbon fiber-reinforced molding material without damaging a mold or causing other problems. The production method is thus suitably used to produce various molded articles, such as automobile parts.

## Description

### Technical Field

The present invention relates to a method for a carbon fiber-reinforced molding material and a method for producing a molded article.

This application claims priority to Japanese Patent Application No. 2019-105295 filed June 5, 2019, the contents of which are hereby incorporated by reference.

### Background Art

A fiber-reinforced resin composite material made of a thermosetting resin, such as an epoxy resin or an unsaturated polyester resin, reinforced with a reinforcing fiber, such as carbon fiber, has attracted attention because of its characteristics of being light in weight but having high heat resistance and high mechanical strength. Such a fiber-reinforced resin composite material has been increasingly used in various structures, such as bodies or various parts of automobiles and aircrafts. Examples of methods for molding such a fiber-reinforced resin composite material include an autoclave method which involves heating and curing a material called a prepreg in an autoclave capable of pressurizing the material, and a method that involves hot press molding using a sheet molding compound (SMC) or a bulk molding compound (BMC).

Hot press molding typically involves molding a molding material in a mold at 110°C to 180°C at a pressure of 1 to 20 MPa and holding these molding conditions for a predetermined time to produce a molded article. The steel used for the mold is strong and hard, but inclusion of foreign matter in the molding material, particularly inclusion of metal as foreign matter, causes the foreign matter to significantly damage the mold because the molding material is molded under high pressure.

Examples of devices for detecting such foreign metal include electromagnetic induction foreign matter detectors (see PTL 1). Investigation of foreign metal in a carbon fiber-reinforced molding material with an electromagnetic induction metal detector, however, causes the conductive carbon fiber to distort the magnetic field, leading to false detection of foreign metal in the absence of foreign metal. There is thus a need of methods for efficiently producing a carbon fiber-reinforced molding material and a molded article by accurately detecting foreign metal in a carbon fiber-reinforced molding material in the process of producing a molded article.

### Citation List

### Patent Literature

PTL 1: Japanese Unexamined Patent Application Publication No. 63-45584

### Summary of Invention

### Technical Problem

An object of the present invention is to provide methods for efficiently producing a carbon fiber-reinforced molding material and a molded article by accurately detecting foreign metal in a carbon fiber-reinforced molding material.

### Solution to Problem

The inventors of the present invention have found that a carbon fiber-reinforced molding material and a molded article are efficiently produced by a method for producing a carbon fiber-reinforced molding material including a detection step using a particular metal detection method, completing the present invention.

Specifically, the present invention is directed to methods for producing a carbon fiber-reinforced molding material and a molded article including a step of detecting the presence of metal in a molding material by a magnetic sensor-type metal detection method.

### Advantageous Effects of Invention

Since molded articles produced by the methods for producing a carbon fiber-reinforced molding material and a molded article according to the present invention are light in weight but have high heat resistance and high mechanical strength, the molded articles can be suitably used as automotive parts, railway vehicle parts, aerospace craft parts, ship parts, housing equipment parts, sports equipment parts, parts for light vehicles, parts for construction and civil engineering, bodies of OA equipment and other equipment, and other applications.

### Description of Embodiments

A method for producing a carbon fiber-reinforced molding material according to the present invention includes a step of detecting the presence of metal in a molding material by a magnetic sensor-type metal detection method.

The magnetic sensor-type metal detection method involves magnetizing a metal with a magnetizing magnet and detecting a magnetic field generated from the magnetized metal with a magnetic sensor.

Since the detection method can detect only a metal in a carbon fiber-reinforced molding material without detecting a conductive carbon fiber as a metal, the step of detecting the presence of metal in the carbon fiber-reinforced molding material by the detection method allows efficient production of a molded article without damaging the mold or causing other problems.

The form of the carbon fiber-reinforced molding material is not limited as long as the carbon fiber-reinforced molding material contains a resin and a carbon fiber. The carbon fiber-reinforced molding material is preferably a sheet molding compound (hereinafter abbreviated as a "SMC") or a bulk molding compound (hereinafter abbreviated as a "BMC"), which contains cut carbon fibers dispersed in a resin composition, from the viewpoint of high productivity and design diversity.

Examples of the resin include thermosetting resins, such as a vinyl ester resin, a vinyl urethane resin, an unsaturated polyester resin, an acrylic resin, an epoxy resin, a phenolic resin, a melamine resin, a furan resin; and thermoplastic resins, such as a polyamide resin, a polyethylene terephthalate resin, a polybutylene terephthalate resin, a polycarbonate resin, a urethane resin, a polypropylene resin, a polyethylene resin, a polystyrene resin, an acrylic resin, a polybutadiene resin, a polyisoprene resin, and resins produced by modifying these resins by copolymerization. These resins may be used alone or in combination of two or more. Among these resins, thermosetting resins are preferred from the viewpoint of heat resistance and high elastic modulus, and a vinyl ester resin and an unsaturated polyester resin are more preferred from the viewpoint of, for example, rapid curing and low viscosity.

The carbon fiber may be one of various carbon fibers, such as a polyacrylonitrile-based carbon fiber, a pitchbased carbon fiber, and a rayon-based carbon fiber. Among these, a polyacrylonitrile-based carbon fiber is preferred since a carbon fiber with high strength is easily available.

The number of filaments in the fiber bundle used as the carbon fiber is preferably from 1,000 to 60,000 in order to further improve the resin impregnation and the mechanical properties of the molded article.

The carbon fiber may be a fiber assembly, a woven fabric, or a non-woven fabric. The carbon fiber may be a fiber bundle composed of fibers arranged in one direction, a fiber bundle sheet, or woven fiber bundles. The fiber assembly may have a three-dimensional shape with a thickness.

The carbon fiber is preferably cut into 2.5 to 50 mm and contained in the molding material in order to further improve the mechanical properties and the moldability of objects with complicated three-dimensional shapes or various thicknesses.

The carbon fiber content in the carbon fiber composite material is preferably in the range of 25 to 80 mass%, more preferably in the range of 35 to 70 mass% in order to further improve the mechanical properties of the obtained molded article. If the carbon fiber content is low, a molded article with high strength may not be produced. If the carbon fiber content is high, the impregnation of the fiber with resin is insufficient, so that a molded article may blister and may not have high strength.

The carbon fiber composite material contains a resin and a carbon fiber and may contain other components, such as a unsaturated monomer, a polymerization initiator, a polymerization inhibitor, a curing accelerator, a filler, a shrinkage reducing agent, a release agent, a viscosity improver, a viscosity reducer, a pigment, an antioxidant, a plasticizer, a flame retardant, an antibacterial agent, a UV stabilizer, a UV absorber, a reinforcing material, and a photocuring agent.

Examples of the unsaturated monomer include monofunctional (meth)acrylate compounds, such as benzyl (meth)acrylate, phenoxyethyl (meth)acrylate, phenoxy polyethylene glycol (meth)acrylate, polyethylene glycol (meth)acrylate alkyl ether, polypropylene glycol (meth)acrylate alkyl ether, 2-ethylhexyl methacrylate, isodecyl (meth)acrylate, lauryl (meth)acrylate, isotridecyl (meth)acrylate, n-stearyl (meth)acrylate, tetrahydrofurfuryl methacrylate, isobornyl (meth)acrylate, dicyclopentenyloxyethyl (meth)acrylate, and dicyclopentanyl methacrylate; di(meth)acrylate compounds, such as ethylene glycol di(meth)acrylate, propylene glycol di(meth)acrylate, 1,4-butanediol di(meth)acrylate, 1,3-butanediol di(meth)acrylate, neopentyl glycol di(meth)acrylate, 1,6-hexanediol di(meth)acrylate, bisphenol di(meth)acrylate, 1,4-cyclohexanedimethanol di(meth)acrylate; and diallyl phthalate, divinylbenzene, and styrene. Among these, aromatic unsaturated monomers are preferred, and benzyl methacrylate and phenoxyethyl methacrylate are more preferred in order to provide a molding material having high strength. These unsaturated monomers may be used alone or in combination of two or more.

The polymerization initiator is preferably, but not necessarily, an organic peroxide. Examples of the organic peroxide include a diacetyl peroxide compound, peroxy ester compounds, hydroperoxide compounds, ketone peroxide compounds, alkyl perester compounds, percarbonate compounds, and peroxyketals. The polymerization initiator can be appropriately selected according to the molding conditions. These polymerization initiators may be used alone or in combination of two or more.

Examples of the polymerization inhibitor include hydroquinone, trimethylhydroquinone, p-t-butylcatechol, t-butylhydroquinone, toluhydroquinone, p-benzoquinone, naphthoquinone, hydroquinone monomethyl ether, phenothiazine, copper naphthenate, copper chloride, and piperidine derivatives. These polymerization inhibitors may be used alone or in combination of two or more.

Examples of the curing accelerator include metal soaps, such as cobalt naphthenate, cobalt octenoate, vanadyl octenoate, copper naphthenate, and barium naphthenate; and metal chelate compounds, such as vanadyl acetylacetate, cobalt acetylacetate, and iron acetylacetonate. Examples of amines include N,N-dimethylamino-p-benzaldehyde, N,N-dimethylaniline, N,N-diethylaniline, N,N-dimethyl-p-toluidine, N-ethyl-m-toluidine, triethanolamine, m-toluidine, diethylenetriamine, pyridine, phenylmorpholine, piperidine, and diethanolaniline. These curing accelerators may be used alone or in combination of two or more.

Examples of the filler include inorganic compounds and organic compounds. The filler can be used to adjust the physical properties, such as strength, elastic modulus, impact strength, and fatigue durability, of the molded article.

Examples of the inorganic compounds include calcium carbonate, magnesium carbonate, barium sulfate, mica, talc, kaolin, clay, celite, asbestos, barite, baryta, silica, silica sand, dolomite limestone, gypsum, aluminum fine powder, hollow microspheres, alumina, glass powder, aluminum hydroxide, white marble, zirconium oxide, antimony trioxide, titanium oxide, molybdenum dioxide, and iron powder.

Examples of the organic compounds include natural polysaccharide powders, such as cellulose and chitin, and synthetic resin powders. Examples of the synthetic resin powders include organic powders composed of hard resin, soft rubber, elastomers, or polymers (copolymers) or other materials, and particles having a multilayer structure, such as a core-shell structure. Specific examples include particles made of butadiene rubber and/or acrylic rubber, urethane rubber, silicon rubber, or other materials, a polyimide resin powder, a fluororesin powder, and a phenolic resin powder. These fillers may be used alone or in combination of two or more.

Examples of the release agent include zinc stearate, calcium stearate, paraffin wax, polyethylene wax, and carnauba wax. Preferred examples include paraffin wax, polyethylene wax, and carnauba wax. These release agents may be used alone or in combination of two or more.

Examples of the viscosity improver include metal oxides, such as magnesium oxide and calcium oxide; metal hydroxides, such as magnesium hydroxide and calcium hydroxide; acrylic resin-based fine particles; and polyisocyanate. The viscosity improver can be appropriately selected according to the ease of handling of the fiber-reinforced molding material of the present invention. These viscosity improvers may be used alone or in combination of two or more.

The method for producing a molding material according to the present invention includes a step of detecting the presence of metal in a carbon fiber-reinforced molding material by a magnetic sensor-type metal detection method. An example method for detecting the presence of metal in the process of producing a SMC involves mixing and dispersing components, such as the vinyl ester resin, the unsaturated monomer, the thermoplastic resin, the polyisocyanate, and the polymerization initiator, by using a mixer, such as a common mixer, an intermixer, a planetary mixer, a roll, a kneader, or an extruder, applying the resulting resin composition to carrier films placed above and below such that the resin composition has a uniform thickness, sandwiching the carbon fiber between the resin compositions on the carrier films placed above and below, then passing and pressing the whole between impregnation rolls such that the carbon fiber is impregnated with the resin composition, then subjecting the resulting object to the magnetic sensor-type metal detection process, and winding the object into a roll shape or folding the object in a zigzag manner. Subsequently, the resulting product is preferably aged at a temperature of 25°C to 60°C. The carrier film may be, for example, a polyethylene film, a polypropylene film, a laminate film of polyethylene and polypropylene, polyethylene terephthalate, or nylon. The magnetic sensor-type metal detection is performed before molding or may be performed after the aging process.

Like the method for producing a SMC, examples of the method for producing a BMC include a method that involves mixing and dispersing components, such as a resin, a unsaturated monomer, a viscosity improver, and a polymerization initiator, by using a mixer, such as a common mixer, an intermixer, a planetary mixer, a roll, a kneader, or an extruder, and mixing and dispersing a carbon fiber with/in the resulting resin composition. After the resin composition and the carbon fiber are mixed and dispersed to form a BMC, the BMC can be processed into a rod shape, a plate shape, or other shapes, which is then aged after the magnetic sensor-type metal detection process. Similarly to the SMC, the BMC is preferably aged at a temperature of 25°C to 60°C. After the aging process, the BMC may be processed into a rod shape, a plate shape, or other shapes before molding and then subjected to magnetic sensor-type metal detection.

The hot press molding may be a method for producing a molded article that involves weighing a predetermined amount of a molding material, such as SMC or BMC, placing the molding material in a mold previously heated to 110°C to 180°C, clamping the mold in a press molding machine to mold the molding material, maintaining a molding pressure of 0.1 to 30 MPa to cure the molding material, and then taking out a molded article. With regard to specific molding conditions, a molding pressure of 1 to 15 MPa is preferably maintained at a mold temperature of 120°C to 160°C in the mold for 1 to 2 minutes per millimeter of the thickness of the molded article, and a molding pressure of 1 to 15 MPa is more preferably maintained at a mold temperature of 140°C to 160°C for 30 to 90 seconds per millimeter of the thickness of the molded article in order to further improve the productivity.

Since molded articles made from the carbon fiber-reinforced molding material according to the present invention are light in weight but have high heat resistance and high mechanical strength, the molded articles can be suitably used as automotive parts, railway vehicle parts, aerospace craft parts, ship parts, housing equipment parts, sports equipment parts, parts for light vehicles, parts for construction and civil engineering, bodies of OA equipment and other equipment, and other applications.

### Examples

The present invention will be described below in detail by way of specific examples. The hydroxyl value was determined by measuring the number of milligrams of potassium hydroxide (mgKOH/g) required to neutralize acetic acid generated when 1 g of a resin sample was reacted at a specified temperature for a specified time using an acetylating agent according to the method described in JIS K-0070.

### (Production Example 1: Production of Resin Composition (1) )

In a 2L-flask equipped with a thermometer, a nitrogen inlet tube, and a stirrer, 661 parts by mass of an epoxy resin ("EPICLON 850" available from DIC Corporation, bisphenol A-type epoxy resin, epoxy equivalent 188), 58.8 parts by mass of bisphenol A, and 0.36 parts by mass of 2-methylimidazole were charged and heated to 120°C to cause reactions for 3 hours, and the epoxy equivalent was measured. After the epoxy equivalent was confirmed to be 240 as set, the product was cooled to around 60°C, 253 parts by mass of methacrylic acid and 0.28 parts by mass of t-butylhydroquinone were then charged, and the mixture was heated to 90°C under a gas flow of a mixture of nitrogen and air at 1:1. To the mixture, 0.25 parts by mass of 2-methylimidazole was added, and the resulting mixture was heated to 110°C to cause reactions for 10 hours. As a result, the acid value was 6 or less, and the reaction was terminated. After being cooled to around 60°C, the product was taken out of the reaction vessel to provide a vinyl ester resin (1) having a hydroxyl value of 206 mgKOH/g.

A resin composition (1) was prepared by mixing 1.5 parts by mass of ethylene urea, 20 parts by mass of a polyisocyanate ("Cosmonate LL" available from Mitsui Chemicals, Inc., hereinafter abbreviated as a "polyisocyanate (1)"), and 1 part of a polymerization initiator ("Kayacarbon AIC-75" available from Kayaku Akzo Corporation, organic peroxide, hereinafter abbreviated as a "polymerization initiator (1)") with 100 parts by mass of a resin solution in which 55 parts by mass of the vinyl ester resin (1) produced above was dissolved in 45 parts by mass of phenoxyethyl methacrylate.

### (Production Example 1: Production of Carbon Fiber-Reinforced Molding Material (X-1))

The resin composition (1) produced above was applied to a laminate film of polyethylene and polypropylene at a coating amount of 0.5 kg/m², and carbon fibers (hereinafter abbreviated as carbon fibers (F-1)) 25 mm cut from a carbon fiber roving ("T700SC-12000-50C" available from Toray Industries, Inc.) were uniformly dropped on the resin composition (X-1) from the air so as to provide no fiber orientation, a uniform thickness, and a carbon fiber content of 50% by mass. The carbon fibers were sandwiched between the laminate film and a laminate film coated with 0.5 kg/m² of the resin composition (X-1) such that the carbon fibers were impregnated with the resin, and then left to stand in a thermostatic incubator at 45°C for 24 hours to produce a carbon fiber-reinforced molding material (X-1) (SMC). The weight of the carbon fiber-reinforced molding material (X-1) was 2 kg/m².

### (Production Example 2: Production of Carbon Fiber-Reinforced Molding Material (X-2))

A carbon fiber-reinforced molding material (X-2) was produced in the same manner as in Production Example 1 except that the carbon fiber content in Production Example 1 was changed from 50 mass% to 40 mass%.

A SUS304 ball with Φ 1.0 mm (Japan Inspection Instruments Manufacturers' Association) was used as a foreign metal (1).

### (Example 1)

The carbon fiber-reinforced molding material (X-1) produced above was released from the films. The foreign metal (1) was placed on a stack of four sheets 210 mm × 210 mm cut from the carbon fiber-reinforced molding material (X-1), and the stack of four sheets with the foreign metal (1) was placed on a transfer belt of a micro metal detector ("NT2R-K4B" available from Nikka Densok Limited, magnetic sensor type) and transferred at 20 m/min. An alarm sounded, and the foreign metal (1) was detected.

Next, the foreign metal (1) was removed from the transferred carbon fiber-reinforced molding material 210 mm square, and the carbon fiber-reinforced molding material was placed on a transfer belt of a micro metal detector ("NT2R-K4B" available from Nikka Densok Limited, magnetic sensor type) and transferred at 20 m/min. An alarm did not sound, and the foreign metal was not detected.

From this result, the transferred carbon fiber-reinforced molding material 210 mm square was determined to be free of foreign metal. The carbon fiber-reinforced molding material 210 mm square was set at the center of a plate-shaped mold 30 × 30 cm² and molded at a press mold temperature of 150°C and a press pressure of 10 MPa for a press time of 5 minutes to produce a molded article having a plate shape and a thickness of about 3 mm.

### [Evaluation of Flexural Strength • Flexural Modulus]

Five samples were cut in each of the horizontal direction and the vertical direction from the molded article produced above and subjected to a three-point flexural test in accordance with JIS K 7074 to measure the flexural strength and the flexural modulus. The flexural strength was 350 MPa, and the flexural modulus was 25 GPa.

### (Example 2)

Detection of foreign metal and determination of whether molding was possible were performed in the same manner as in Example 1 except that the carbon fiber-reinforced molding material (X-1) used in Example 1 was changed to the carbon fiber-reinforced molding material (X-2). An alarm sounded and the foreign metal (1) was detected only when there was the foreign metal (1) on the carbon fiber-reinforced molding material (2). The carbon fiber-reinforced molding material from which the foreign metal (1) had been removed was molded in the same manner as in Example 1, and the molded article was evaluated for flexural strength and flexural modulus. The flexural strength was 300 MPa, and the flexural modulus was 21 GPa.

### (Comparative Example 1)

The carbon fiber-reinforced molding material (X-1) produced above was released from the films. The foreign metal (1) was placed on a stack of four sheets 210 mm × 210 mm cut from the carbon fiber-reinforced molding material (X-1), and the stack of four sheets with the foreign metal (1) was placed on a transfer belt of a metal detector ("LRG-150" available from Nissin Electronics Co., Ltd., electromagnetic induction type) and transferred at 20 m/min. An alarm sounded, and the presence of foreign metal was detected.

Next, the foreign metal (1) was removed from the transferred carbon fiber-reinforced molding material 210 mm square, and the carbon fiber-reinforced molding material was placed on a transfer belt of a metal detector ("LRG-150" available from Nissin Electronics Co., Ltd., electromagnetic induction type) and transferred at 20 m/min. An alarm sounded, and the presence of foreign metal was detected.

Since it was determined that foreign metal was present even though the foreign metal had been removed, it was determined that there was a risk of the foreign metal damaging the mold. Thus, the carbon fiber-reinforced molding material was not molded, and a molded article was not produced.

### (Comparative Example 2)

Detection of foreign metal and determination of whether molding was possible were performed in the same manner as in Comparative Example 1 except that the carbon fiber-reinforced molding material (X-1) used in Comparative Example 1 was changed to the carbon fiber-reinforced molding material (X-2).

As in Comparative Example 1, it was determined that foreign metal was present even though the foreign metal had been removed, and it was thus determined that there was a risk of the foreign metal damaging the mold. The carbon fiber-reinforced molding material was not molded, and a molded article was not produced.

The evaluation results of Examples 1 to 2 and Comparative Examples 1 to 2 are shown in Table 1.

**[Table 1]**

| Table 1 | Example 1 | Example 2 | Comparative Example 1 | Comparative Example 2 |
|---|---|---|---|---|
| Carbon fiber-reinforced molding material | (X-1) | (X-2) | (X-1) | (X-2) |
| Foreign metal | SUS304 ball | SUS304 ball | SUS304 ball | SUS304 ball |
| Metal detection method | magnetic sensor | magnetic sensor | electromagnetic induction | electromagnetic induction |
| Detection of foreign metal (alarm) | sound | sound | sound | sound |
| Detection of foreign metal after removal of foreign metal (alarm) | not sound | not sound | sound | sound |
| Whether molding is possible | possible | possible | impossible | impossible |
| Flexural strength of molded article (MPa) | 350 | 300 | | |
| Flexural modulus of molded article (GPa) | 25 | 21 | | |

It was confirmed that a molded article was efficiently produced by accurately determining whether foreign metal was present according to the production methods of the present invention in Examples 1 and 2.

The production methods in Comparative Examples 1 and 2, which used an electromagnetic induction metal detector instead of a magnetic sensor-type metal detector, did not accurately determine whether foreign metal was present and did not produce a molded article.

## Claims

1. A method for producing a carbon fiber-reinforced molding material comprising a step of detecting the presence of metal in a molding material by a magnetic sensor-type metal detection method.

2. The method for producing a carbon fiber-reinforced molding material according to Claim 1, wherein the magnetic sensor-type metal detection method involves magnetizing a metal with a magnetizing magnet and detecting a magnetic field generated from the magnetized metal with a magnetic sensor.

3. The method for producing a carbon fiber-reinforced molding material according to Claim 1 or 2, wherein the carbon fiber-reinforced molding material contains a thermosetting resin and a carbon fiber.

4. A method for producing a molded article comprising subjecting the carbon fiber-reinforced molding material produced by the production method according to any one of Claims 1 to 3 to hot press molding.
